# EUROPÄISCHE PATENTSCHRIFT

(11) **EP 1 238 478 B1**
(45) Veröffentlichungstag und Bekanntmachung des Hinweises auf die Patenterteilung: **03.11.2004**
(21) Anmeldenummer: 00984972.0
(22) Anmeldetag: 06.11.2000
(51) Int. Cl.: H04B 7/26, H04B 1/707, H04J 3/06

(54) **VERFAHREN ZUR SYNCHRONISATION EINES CDMA-EMPFANGSSIGNALS**
METHOD FOR SYNCHRONIZING A CDMA RECEIVER SIGNAL
PROCEDE POUR LA SYNCHRONISATION D'UN SIGNAL DE RECEPTION AMCR

(30) Priorität: 05.11.1999 DE 19953349
(43) Veröffentlichungstag der Anmeldung: 11.09.2002
(73) Patentinhaber: Infineon Technologies AG, 81669 München (DE)
(72) Erfinder: DOETSCH, Markus, 56072 Koblenz-Rübenach (DE); JUNG, Peter, 67697 Otterberg (DE); PLECHINGER, Jörg, 80469 München (DE); SCHMIDT, Peter, 67167 Erpolzheim (DE); SCHNEIDER, Michael, 56823 Büchel (DE); KELLA, Tideya, 80337 München (DE); BECKER, Burkhard, D-85737 Ismaning (DE)
(74) Vertreter: Charles, Glyndwr
(86) Internationale Anmeldenummer: PCT/EP2000/010940
(87) Internationale Veröffentlichungsnummer: WO 2001/033741

(56) Entgegenhaltungen:
- EP-A- 0 767 557
- EP-A- 0 948 221
- WO-A-98/58463
- WO-A-99/46880
- DE-C- 19 840 232
- US-A- 5 930 366

## Beschreibung

Die Erfindung betrifft ein Verfahren zur Synchronisation eines CDMA-Empfangssignals, insbesondere für Mobilfunksysteme.

CDMA (Code Division Multiple Access) ist ein Verfahren im Kanalzugriff insbesondere bei zellularen Mobilfunksystemen. Hierbei wird allen Teilnehmern gleichzeitig erlaubt, die gesamte zur Verfügung stehende Systembandbreite zu nutzen, wodurch nur wenig Koordination zwischen den Teilnehmern nötig ist. Damit es dennoch nicht zu Kollisionen kommt, werden die Einzelsignale mit jeweils unterschiedlichen Codesequenzen versehen, die eine eindeutige Zuordnung der Signale ermöglichen. Hierbei wird ein schmalbandiges Signal mittels eines Codes zu einem breitbandigen Signal gespreizt. Dies erfolgt dadurch, daß ein zu übertragender digitaler Datenstrom nicht als Folge der Bitwerte 0 und 1 übertragen wird, sondern die digitalen Nutzdatenwerte durch eine Folge von N ebenfalls binären Symbolen, sogenannten Codechips oder Sub-Bits repräsentiert werden. Die gesamte Folge der Codechips wird dann über den Kanal übertragen. In praktischen Systemen treten Spreizungsfaktoren zwischen etwa 10 und 1000 auf. Die Spreizung wird mit einem Code vorgenommen, welcher unabhängig von den zu sendenden Daten ist. Der Empfänger arbeitet synchron zu der Codesequenz des Senders und macht die sendeseitige Spreizung wieder rückgängig, bevor die eigentliche Codierung der Datensignale erfolgt.

In dem Empfänger muß daher eine Synchronisation auf das empfangene CDMA-Signal erfolgen. Das CDMA-Signal wird in Zeitschlitzen übertragen, die jeweils eine bestimmte Anzahl von Codechips enthalten. Zur Synchronisation weist jeder Zeitschlitz des CDMA-Empfangssignals einen Synchronisationskanal SCH auf, der eine Synchronisations-Chipsequenz enthält. In dem Empfänger ist diese Synchronisations-Chipsequenz abgespeichert, und der Empfänger korreliert mittels nicht-kohärenter Korrelatoren seine abgespeicherte Synchronisationserkennungs-Chipsequenz mit den empfangenen und abgetasteten Codechips des CDMA-Empfangssignals. Ein CDMA-Zeitschlitz enthält 2560 Codechips, die mindestens mit einem Abtastfaktor von zwei abgetastet werden müssen. Somit erhält man mindestens 5120 Abtastwerte, die jeweils digital, beispielsweise als 16 Bit umfassende Abtastdaten, abgespeichert werden müssen. Die Zeitschlitz-Synchronisationsprozedur erstreckt sich über mehrere Zeitschlitze, wobei etwa 8 bis 16 Zeitschlitze zur sicheren Erkennung des Synchronisationssignals innerhalb des Zeitschlitzes notwendig sind. Die Werte der abgetasteten und korrelierten Codechips werden als digitale Korrelationswerte in einem RAM-Speicher zur weiteren Auswertung abgespeichert. Bei dem bisherigen Verfahren (bekannt aus WO-A-98 58463) zur Synchronisation eines CDMA-Empfangssignals erfolgt das Aufsuchen der Synchronisations-Chipsequenz ohne Einschränkung des Suchgebiets über die ganze Länge des empfangenen CDMA-Zeitschlitzes, ohne daß eine Kompression der korrelierten Codechip-Abtastwerte erfolgt. Daher ist der benötigte Speicherplatz für die Durchführung der Synchronisation sehr hoch. Dieser für die Synchronisation benötigte Speicherplatz steht für sonstige Prozeßaufgaben, die in dem Empfänger durchgeführt werden müssen, nicht zur Verfügung. Insbesondere bei Mobilfunkempfängern ist der Speicherplatz begrenzt und kann nicht beliebig ausgeweitet werden.

Es ist daher die Aufgabe der vorliegenden Erfindung, ein Verfahren zur Synchronisation eines CDMA-Empfangssignals zu schaffen, das eine zuverlässige Synchronisation des Empfangssignals bei minimalem Speicherbedarf ermöglicht.

Diese Aufgabe wird erfindungsgemäß durch ein Verfahren mit den in Patentanspruch 1 angegebenen Merkmalen gelöst.

Die Erfindung schafft ein Verfahren zur Synchronisation eines CDMA-Empfangssignals, bei dem eine in dem CDMA-Empfangssignal enthaltene Synchronisationssequenz in mehreren aufeinanderfolgenden Suchschritten ermittelt wird, wobei bei jedem Suchschritt das CDMA-Empfangssignal innerhalb eines Zeitschlitz-Suchgebietes mit einer abgespeicherten Synchronisations-Erkennungssequenz zur Bildung von Korrelationswerten korreliert wird und das Zeitschlitz-Suchgebiet des nachfolgenden Suchschrittes in Abhängigkeit von den ausgewerteten Korrelationswerten zur Erhöhung der Suchgenauigkeit eingeengt wird.

Vorzugsweise werden bei jedem Suchschritt die Korrelationswerte von mehreren nacheinanderfolgenden Zeitschlitzen einer Zeitschlitzgruppe ausgewertet.

Bei einer bevorzugten Ausführungsform werden bei jedem Suchschritt für jeden Zeitschlitz einer Zeitschlitzgruppe eine bestimmte Anzahl von Codechips, die in dem CDMA-Empfangssignal enthalten sind, entsprechend dem Zeitschlitz-Suchgebiet abgetastet und mit der Synchronisationssequenz zur Erzeugung von Korrelationswerten korreliert.

Bei einer weiteren vorteilhaften Ausgestaltung des erfindungsgemäßen Verfahrens werden die erzeugten Korrelationswerte eines Zeitschlitzes gruppenweise zu akkumulierten Korrelationswerten zusammengefaßt.

Bei einer weiteren vorteilhaften Ausgestaltung des erfindungsgemäßen Verfahrens werden die entsprechenden akkumulierten Korrelationswerte der Zeitschlitze innerhalb einer Zeitschlitzgruppe zu Summenkorrelationswerten aufsummiert.

Vorzugsweise liegt das Suchgebiet bei dem nachfolgenden Suchschritt um diejenige Position des Zeitschlitzes herum, an der der maximale Summenkorrelationswert für die vorangegangene Zeitschlitzgruppe ermittelt wurde.

Der Grad der Einengung des Suchgebiets eines nachfolgenden Suchschritts ist vorzugsweise einstellbar.

Vorzugsweise ist die Anzahl der gemeinsam ausgewerteten Zeitschlitze innerhalb einer Zeitschlitzgruppe bei jedem Suchschritt unterschiedlich einstellbar.

Bei einer vorteilhaften Ausgestaltung wird der in dem letzten Suchschritt ermittelte maximale Summenkorrelationswert zur Synchronisation des CDMA-Empfangssignals verwendet.

Bei einer bevorzugten Ausführungsform des erfindungsgemäßen Verfahrens werden die in den CDMA-Empfangssignal enthaltenen Codechips eines Zeitschlitzes bei jedem Suchschritt im Bereich des Zeitschlitz-Suchgebietes mit einer einstellbaren Abtastfrequenz abgetastet.

Die abgetasteten Codechips werden vorzugsweise mit der Synchronisations-Erkennungssequenz zur Bildung von Korrelationswerten korreliert.

Die Abtastung erfolgt vorzugsweise mit einem Abtastfaktor von mindestens zwei.

Jeder CDMA-Zeitschlitz umfaßt bei einer bevorzugten Ausführungsform 2560 Codechips, die in einem ersten Suchschritt zur Bildung von 5120 Codechip-Abtastwerten abgetastet werden.

Die Codechip-Abtastwerte werden bei einer bevorzugten Ausführungsform mittels nicht-kohärenter Korrelatoren zur Bildung der Korrelationswerte korreliert.

Die Korrelationswerte werden vorzugsweise gruppenweise akkumuliert, wobei jede Gruppe eine bestimmte Anzahl von aufeinanderfolgenden Korrelationswerten umfaßt, die zusammengefaßt werden.

Die berechneten Summen-Korrelationswerte werden vorzugsweise in einem Speicher zwischengespeichert.

Bei einer bevorzugten Ausführungsform des erfindungsgemäßen Verfahrens sind zwei Suchschritte vorgesehen, wobei das Suchgebiet in dem ersten Suchschritt alle 5120 Codechip-Abtastwerte eines CDMA-Zeitschlitzes umfaßt, und wobei das Suchgebiet in dem zweiten Suchschritt etwa 500 Codechip-Abtastwerte eines CDMA-Zeitschlitzes umfaßt.

Bei einer besonders bevorzugten Ausführungsform des erfindungsgemaßen Verfahrens umfaßt die gemeinsam verarbeitete Zeitschlitzgruppe in dem ersten Suchschritt etwa 8 Zeitschlitze und in dem zweiten Suchschritt etwa 4 Zeitschlitze.

Vorzugsweise werden in dem ersten Suchschritt jeweils die Korrelationswerte eines Zeitschlitzes zu 512 akkumulierten Korrelationswerten zusammengefaßt, die mit den entsprechenden 512 akkumulierten Korrelationswerten der übrigen Zeitschlitze innerhalb der gleichen Zeitschlitzgruppe zu 512 Summenkorrelationswerten aufsummiert werden.

Bei einer bevorzugten Ausführungsform werden in dem zweiten Suchschritt die aus den 500 Codechip-Abtastwerten gebildeten Korrelationswerte mit den entsprechenden Korrelationswerte der ubrigen Zeitschlitze der Zeitschlitzgruppe zu 500 Summenkorrelationswerten der Zeitschlitzgruppe ohne vorherige Akkumulation aufsummiert.

Im weiteren wird eine bevorzugten Ausführungsform des erfindungsgemäßen Verfahrens zur Synchronisation eines CDMA-Empfangssignals unter Bezugnahme auf die beigefügten Zeichnungen zur Erläuterung erfindungswesentlicher Merkmale beschrieben.

Es zeigen:
Fig. 1 ein Ablaufdiagramm zur Erläuterung eines Suchschritts des erfindungsgemäßen Verfahrens;
Fig. 2 ein Ablaufdiagramm der bevorzugten Ausführungsform des erfindungsgemäßen Verfahrens mit zwei Suchschritten;
Fig. 3 eine schematische Darstellung zur Erläuterung der Bildung eines Summenkorrelationswertes bei dem erfindungsgemäßen Verfahren. Wie aus Fig. 1 zu erkennen ist, besteht der Suchschritt des erfindungsgemäßen Verfahrens im wesentlichen aus sechs Unterschritten.

In einem Schritt S1 wird das Suchgebiet innerhalb eines empfangenen CDMA-Zeitschlitzes in Abhängigkeit von den ausgewerteten Korrelationswerten des vorangegangenen Suchschrittes festgelegt. Dabei umfaßt das Suchgebiet in dem ersten Suchschritt des erfindungsgemäßen Verfahrens die gesamte Breite des CDMA-Empfangszeitschlitzes, d.h. alle 2560 Codechips. Das Zeitschlitz-Suchgebiet eines Suchschritts wird bei jedem Suchschritt zur Erhöhung der Suchgenauigkeit eingeengt.

In einem Schritt S2 werden die abgetasteten Codechipwerte eingelesen. Die Abtastung der Codechipwerte erfolgt mindestens mit einem Abtastungsfaktor von zwei, so daß sich bei 2560 Codechipwerten pro Zeitschlitz im ersten Suchschritt 5120 Abtastwerte ergeben. Mit zunehmender Suchgenauigkeit wird bei den Suchschritten die Anzahl der eingelesenen Codechip-Abtastwerte immer geringer.

Im Schritt S3 werden die eingelesenen Codechip-Abtastwerte mit der in dem Empfänger abgespeicherten Synchronisations-Erkennungssequenz mittels Korrelatoren korreliert, so daß man im ersten Suchschritt pro Zeitschlitz 5120 Korrelationswerte erhält.

Die erhaltenen Korrelationswerte werden im Schritt S4 gruppenweise zu akkumulierten Korrelationswerten zusammengefaßt. Beispielsweise werden jeweils 10 aufeinanderfolgende Korrelationswerte zu einem akkumulierten Korrelationswert zusammengefaßt und zwischengespeichert. In dem ersten Suchschritt werden somit 512 akkumulierte Korrelationswerte in dem Speicher des Empfängers zwischengespeichert.

Im Schritt S5 werden die entsprechenden akkumulierten Korrelationswerte aller Zeitschlitze innerhalb einer Zeitschlitzgruppe zu einem Summenkorrelationswert aufsummiert. In dem ersten Suchschritt werden 512 Summenkorrelationswerte berechnet. Umfaßt die Zeitschlitzgruppe bei dem ersten Suchschritt beispielsweise 8 aufeinanderfolgende Zeitschlitze, werden jeweils die 8 ersten akkumulierten Korrelationswerte aufsummiert, die 8 zweiten akkumulierten Korrelationswerte usw. und schließlich die 8 fünfhundertzwölften akkumulierten Korrelationswerte aufsummiert.

Aus den so gebildeten Summenkorrelationswerten, bei denen es sich in dem ersten Suchschritt um 512 Summenkorrelationswerte handelt, wird im Schritt S6 der maximale Summenwer der Summenakkumulations-Korrelationswerte ermittelt. Es kann sich beispielsweise ergeben, daß der dreihundertsiebzehnte Summenakkumulations-Korrelationswert den maximalen Wert aufweist. Die Ermittlung des Maximalwerts erfolgt vorzugsweise durch einen Spitzendetektor. Die Adresse des so ermittelten maximalen Summenkorrelationswertes wird als Zeitablaufinformation für den nächsten Suchschritt verwendet. In dem nächsten Suchschritt wird das Zielsuchgebiet in Abhängigkeit von dem maximal ermittelten Summenkorrelationswert festgelegt. Dabei liegt das Suchgebiet des nachfolgenden Suchschritts um diejenige Position des Zeitschlitzes herum, an der der maximale Summenkorrelationswert in dem vorangegangenen Suchschritt ermittelt wurde. Die Breite des Suchgebiets des nachfolgenden Suchschritts ist dabei geringer als die Breite des vorangegangenen Suchschritts, wobei der Grad der Einengung des Suchgebiets einstellbar ist. Die Suche in dem nachfolgenden Suchschritt erfolgt mit erhöhter Genauigkeit. Die Genauigkeit wird gesteigert, indem man eine gruppenweise Zusammenfassung von mehreren ermittelten Korrelationswerten zu akkumulierten Korrelationswerten in dem nachfolgenden Suchschritt unterläßt bzw. kleinere Gruppen bildet.

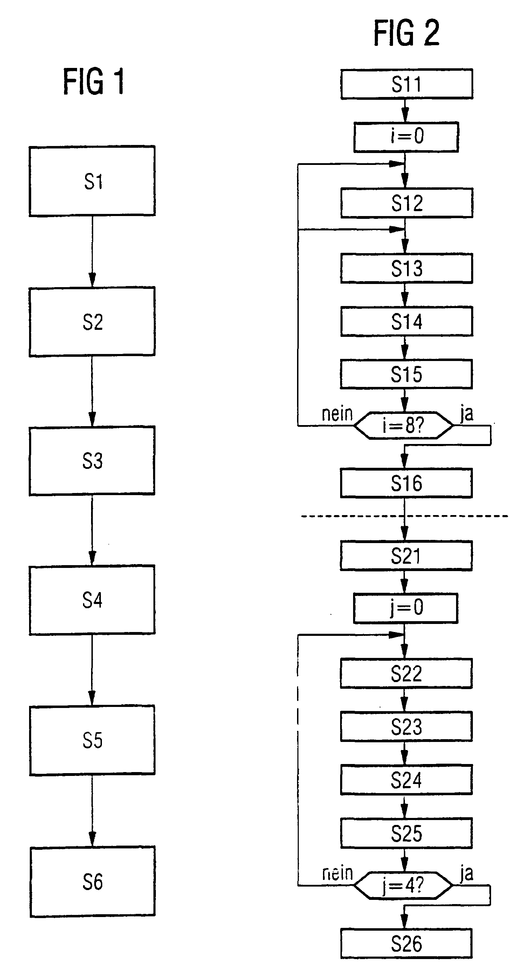

Fig. 2 zeigt ein Ablaufdiagramm einer besonders bevorzugten Ausführungsform des erfindungsgemäßen Verfahrens zur Synchronisation eines CDMA-Empfangssignals mit lediglich zwei Suchschritten. Dabei umfaßt der erste Suchschritt die Unterschritte S11 bis S16 und der zweite Suchschritt die Suchschritte S21 bis S26.

In dem ersten Suchschritt umfaßt das Suchgebiet die gesamte Länge eines CDMA-Zeitschlitzes, beispielsweise 2560 Codechips. Dementsprechend wird im Schritt S11 des ersten Suchschritts das Zeitschlitz-Suchgebiet auf die gesamte Länge eines CDMA-Zeitschlitzes festgelegt. Anschließend wird ein Zähler i initialisiert, mit dem die Anzahl der bearbeiteten Zeitschlitze innerhalb einer ersten Zeitschlitzgruppe für den ersten Suchschritt gezählt wird. Im Schritt S12 werden die empfangenen Codechips abgetastet und die abgetasteten Codechipwerte eingelesen. Die Abtastrate zur Abtastung der Codechipdaten beträgt dabei mindestens zwei. Dementsprechend werden im Schritt S12 5120 Codechip-Abtastwerte eingelesen.

Im Schritt S13 werden die eingelesenen Codechip-Abtastwerte des Zeitschlitzes innerhalb der Zeitschlitzgruppe mit der abgespeicherten Synchronisations-Erkennungssequenz durch Korrelatoren zur Bildung von 5120 Korrelationswerten korreliert.

Die Korrelationswerte werden im Schritt S14 gruppenweise zusammengefaßt. Beispielsweise werden 10 aufeinanderfolgende einzelne Korrelationswerte zu einem akkumulierten bzw. komprimierten Korrelationswert zusammengefaßt und zwischengespeichert. Der für diesen Schritt benötigte Speicher benötigt lediglich 512 Speicherzellen, die jeweils einen akkumulierten Korrelationswert mit einer Auflösung von beispielsweise 16 Bit abspeichern.

Im Schritt S15 werden die entsprechenden akkumulierten Korrelationswerte der Zeitschlitze innerhalb einer Zeitschlitzgruppe zu Summenkorrelationswerten der Zeitschlitzgruppe aufsummiert. Wird die Anzahl der auszuwertenden Zeitschlitze in dem ersten Suchschritt mit 8 festgelegt, werden jeweils 8 akkumulierte Korrelationswerte zu einem Summenkorrelationswert aufsummiert. Es ergeben sich somit 512 Summenkorrelationswerte für jede Zeitschlitzgruppe. Wird festgestellt, daß alle Zeitschlitze innerhalb einer Zeitschlitzgruppe ausgewertet wurden, wird im Schritt S16 der maximale zwischengespeicherte Summenkorrelationswert durch einen Spitzendetektor ermittelt. Die Adresse des maximalen Summenkorrelationswerts wird als Zeitinformation für die Suche in dem zweiten Suchschritt verwendet. Die Wahrscheinlichkeit ist hoch, daß sich die Synchronisationssequenz des CDMA-Empfangssignals in der Nähe der Position befindet, für die der maximale Summenkorrelationswert ermittelt wurde.

Dementsprechend wird im ersten Unterschritt S21 des zweiten Suchschritts das Zeitschlitz-Suchgebiet derart festgelegt, daß es sich um die Position des maximalen Summenkorrelationswertes befindet. Der Grad der Einengung des Suchgebiets im zweiten Suchschritt ist dabei frei einstellbar, wobei vorzugsweise etwa 250 Codechipwerte abgetastet werden, so daß insgesamt 500 Codechip-Abtastwerte in dem zweiten Suchschritt ausgewertet werden. Die Anzahl der im zweiten Suchschritt ausgewerteten aufeinanderfolgenden Zeitschlitze ist ebenfalls einstellbar und beträgt bei einer bevorzugten Ausführungsform vier aufeinanderfolgende Zeitschlitze. Ein entsprechender Zähler wird initialisiert, und die abgetasteten Codechipwerte des Zeitschlitzes werden im Schritt S22 eingelesen.

Die eingelesenen Werte werden im Schritt S23 wiederum mit der abgespeicherten Synchronisations-Erkennungssequenz korreliert. In dem zweiten Suchschritt erfolgt keine Zusammenfassung bzw. Korrelation der ermittelten Korrelationswerte, so daß die Suchgenauigkeit erhöht ist.

Die Korrelationswerte werden im Schritt S24 somit ohne Datenkompression in dem internen Speicher des Empfängers abgespeichert. Im Schritt S25 werden die zwischengespeicherten Korrelationswerte über alle Zeitschlitze der zweiten Zeitschlitzgruppe aufsummiert. Die zweite Zeitschlitzgruppe von aufeinanderfolgenden Zeitschlitzen umfaßt im zweiten Suchschritt vorzugsweise vier Zeitschlitze. Aus den aufsummierten Korrelationswerten wird im Schritt S26 mittels eines Spitzendetektors die Adresse des maximal aufsummierten Korrelationswertes ermittelt. Der ermittelte Adressenindex des maximalen Korrelationswertes wird zur Zeitrahmensynchronisation verwendet.

Darüber hinaus kann die so gewonnene Zeitinformation weiteren Synchronisationsprozeduren zur Verfügung gestellt werden, nämlich der Zeitrahmensynchronisation sowie der Verzögerungsschätzung.

Die Auswertung der Maximalwerte durch den Spitzendetektor kann durch vorgegebene Schwellenwerte unterstützt werden, die durch einen DSP-Prozessor ausgegeben werden.

Der für die Synchronisation benötigte Speicherbedarf innerhalb des internen RAM des Empfängers umfaßt lediglich 512 Speicherzellen zu beispielsweise je 16 Bit. Der Speicherbedarf des erfindungsgemäßen Verfahrens zur Synchronisation eines CDMA-Empfangssignals ist somit im Vergleich zu dem bisherigen Synchronisationsverfahren erheblich geringer. Die Größe des internen RAM wird von ungefähr 5 k x 16 Bit auf einen Wert von unterhalb 1 k x 16 Bit durch das erfindungsgemäße Synchronisationsverfahren mit mehreren Suchschritten vermindert.

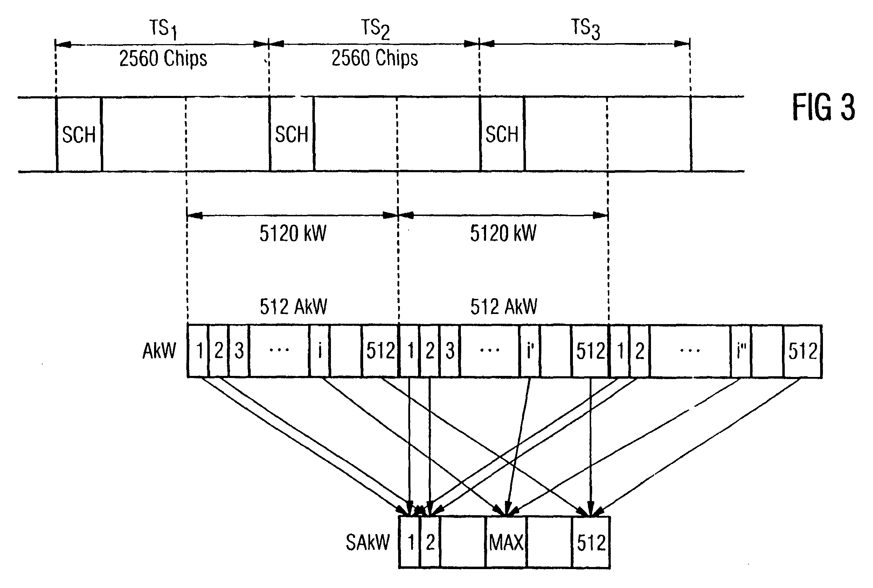

Fig. 3 zeigt anschaulich die Bildung eines Summenkorrelationswertes SAKW im ersten Suchschritt des erfindungsgemäßen Verfahrens. Die CDMA-Zeitschlitze TS (TS: Time Slot) umfassen 2560 Codechips, wobei in jedem Zeitschlitz des CDMA-Empfangssignals eine Synchronisations-Codesequenz SCH enthalten ist. Die empfangenen Codechips werden mit einem Abtastfaktor von zwei zur Bildung von 5120 Abtast-Codechipwerten abgetastet, die mit einer abgespeicherten Synchronisations-Erkennungssequenz zur Bildung von 5120 Korrelationswerten KW korreliert werden. Jeweils 10 aufeinanderfolgende Korrelationswerte werden als eine Gruppe zu einem akkumulierten bzw. zusammengefaßten Korrelationswert AKW zusammengefaßt. Auf diese Weise erhält man 512 akkumulierte Korrelationswerte AKW für jeden Zeitschlitz TS. Die 512 akkumulierten Korrelationswerte werden zwischengespeichert, wobei 512 Speicherzellen belegt werden. In jeder Speicherzelle werden die akkumulierten Korrelationswerte der nachfolgenden Zeitschlitze TS der Zeitschlitzgruppe, die beispielsweise 8 Zeitschlitze umfaßt, aufsummiert, indem beispielsweise 7 Additionsoperationen in jeder der 512 Speicherzellen durchgeführt werden. Die derart aufsummierten akkumulierten Korrelationswerte bilden die Summenkorrelationswerte der Zeitschlitzgruppe SAKW. Der maximale Summenkorrelationswert Sₘₐₓ gibt den Bereich an, in dem sich die Synchronisationssequenz des CDMA-Empfangssignals SCH befindet. Aufgrund der in dem ersten Suchschritt erfolgten groben Suche wird das Suchgebiet bei den weiteren Suchschritten entsprechend der ermittelten Adresse des maximalen Summenkorrelationswerts eingestellt, wobei gleichzeitig die Auflösung erhöht wird. Die Auflösung wird erhöht, indem man die Gruppen von Korrelationswerten, die gruppenweise zu einem akkumulierten Korrelationswerte zusammengefaßt werden, verkleinert, bis im letzten Suchschritt keine Akkumulation der Korrelationswerte durchführt wird. Die Suchgenauigkeit ist daher in dem letzten Suchschritt am höchsten.

## Patentansprüche

1. Verfahren zur Synchronisation eines CDMA-Empfangssignals,
bei dem eine in dem CDMA-Empfangssignal enthaltene Synchronisationssequenz (SCH) in mehreren aufeinanderfolgenden Schritten ermittelt wird,
wobei bei jedem Schritt das CDMA-Empfangssignal innerhalb eines Zeitschlitz-Suchgebietes mit einer abgespeicherten Synchronisations-Erkennungssequenz zur Bildung von Korrelationswerten KW korreliert wird und das Zeitschlitz-Suchgebiet des nachfolgenden Suchschrittes in Abhängigkeit von den ausgewerteten Korrelationswerten KW bei erhöhter Suchgenauigkeit eingeengt wird, und wobei
die erzeugten Korrelationswerte KW eines Zeitschlitzes TS gruppenweise zu akkumulierten Korrelationswerten AKW zusammengefaßt werden.

2. Verfahren nach Anspruch 1,
**dadurch gekennzeichnet,**
**daß** bei jedem Suchschritt die Korrelationswerte KW mehrerer nacheinanderfolgender Zeitschlitze TS einer Zeitschlitzgruppe ausgewertet werden.

3. Verfahren nach Anspruch 1 oder 2,
**dadurch gekennzeichnet,**
**daß** bei jedem Suchschritt für jeden Zeitschlitz TS einer Zeitschlitzgruppe eine bestimmte Anzahl von in dem CDMA-Empfangssignal enthaltenen Codechips abgetastet und mit der Synchronisations-Erkennungssequenz zur Erzeugung von Korrelationswerten KW korreliert werden.

4. Verfahren nach einem der vorangehenden Ansprüche,
**dadurch gekennzeichnet,**
**daß** die entsprechenden akkumulierten Korrelationswerte AKW der Zeitschlitze innerhalb einer Zeitschlitzgruppe zu Summenkorrelationswerten SAKW aufsummiert werden.

5. Verfahren nach einem der vorangehenden Ansprüche,
**dadurch gekennzeichnet,**
**daß** das Suchgebiet des nachfolgenden Suchschrittes um diejenige Position des Zeitschlitzes TS angeordnet liegt, an der der maximale Summenkorrelationswert SAKW für den vorangehenden Suchschritt ermittelt wurde.

6. Verfahren nach einem der vorangehenden Ansprüche,
**dadurch gekennzeichnet,**
**daß** der Grad der Einengung des Suchgebietes einstellbar ist.

7. Verfahren nach einem der vorangehenden Ansprüche,
**dadurch gekennzeichnet,**
**daß** die Anzahl der gemeinsam ausgewerteten Zeitschlitze TS innerhalb einer Zeitschlitzgruppe bei jedem Suchschritt unterschiedlich einstellbar ist.

8. Verfahren nach einem der vorangehenden Ansprüche,
**dadurch gekennzeichnet,**
**daß** in dem letzten Suchschritt die Adresse des ermittelten maximalen Summenkorrelationswertes SAKW Sₘₐₓ zur Synchronisation des CDMA-Empfangssignals verwendet wird.

9. verfahren nach einem der vorangehenden Ansprüche,
**dadurch gekennzeichnet,**
**daß** die in dem CDMA-Empfangssignal enthaltenen Codechips eines Zeitschlitzes TS bei jedem Suchschritt im Bereich des eingestellten Zeitschlitz-Suchgebietes mit einer einstellbaren Abtastfrequenz abgetastet werden.

10. Verfahren nach einem der vorangehenden Ansprüche,
**dadurch gekennzeichnet,**
**daß** der Abtastfaktor zur Bildung der Abtastfrequenz mindestens zwei beträgt.

11. Verfahren nach einem der vorangehenden Ansprüche,
**dadurch gekennzeichnet,**
**daß** jeder CDMA-Zeitschlitz 2560 Codechips umfaßt, die in dem ersten Suchschritt zur Bildung von 5120 Codechip-Abtastwerten abgetastet werden.

12. Verfahren nach einem der vorangehenden Ansprüche,
**dadurch gekennzeichnet,**
**daß** die Korrelationswerte gruppenweise akkumuliert werden,
wobei jeweils eine bestimmte Anzahl von aufeinanderfolgenden Korrelationswerten KW zu akkumulierten Korrelationswerten AKW zusammengefaßt wird.

13. Verfahren nach einem der vorangehenden Ansprüche,
**dadurch gekennzeichnet,**
**daß** die Summenkorrelationswerte zwischengespeichert werden.

14. Verfahren nach einem der vorangehenden Ansprüche,
**dadurch gekennzeichnet,**
**daß** das Verfahren zwei Suchschritte aufweist, wobei das Suchgebiet in dem ersten Suchschritt alle 5120 Codechip-Abtastwerte eines Zeitschlitzes TS umfaßt und das Suchgebiet in dem zweiten Suchschritt etwa 500 Codechip-Abtastwerte eines Zeitschlitzes TS umfaßt.

15. Verfahren nach einem der vorangehenden Ansprüche,
**dadurch gekennzeichnet,**
**daß** die gemeinsame verarbeitete Zeitschlitzgruppe in dem ersten Suchschritt 8 aufeinanderfolgende CDMA-Zeitschlitze und in dem zweiten Suchschritt 4 aufeinanderfolgende CDMA-Zeitschlitze umfaßt.

16. Verfahren nach einem der vorangehenden Ansprüche,
**dadurch gekennzeichnet,**
**daß** in dem ersten Suchschritt jeweils die Korrelationswerte KW innerhalb eines Zeitschlitzes TS zu 512 akkumulierten Korrelationswerten AKW zusammengefaßt werden, die mit den entsprechenden 512 akkumulierten Korrelationswerten AKW der übrigen Zeitschlitze TS der gleichen Zeitschlitzgruppe zu 512 Summenkorrelationswerten SAKW aufsummiert werden.

17. Verfahren nach einem der vorangehenden Ansprüche,
**dadurch gekennzeichnet,**
**daß** in dem zweiten Suchschritt die aus etwa 500 Codechip-Abtastwerten gebildeten Korrelationswerte KW mit den entsprechenden Korrelationswerten KW der übrigen Zeitschlitze TS der gleichen Zeitschlitzgruppe zu 500 Summenkorrelationswerten SAKW der Zeitschlitzgruppe ohne vorherige Akkumulation aufsummiert werden.

## Claims

1. Method for synchronizing a received CDMA signal, in which a synchronization sequence (SCH) contained in the received CDMA signal is determined in a number of successive steps, wherein the received CDMA signal is correlated with a stored synchronization detection sequence for forming correlation values KW within a time slot search field in each step and the time slot search field of the subsequent search step is narrowed down in dependence on the evaluated correlation values KW with increased search accuracy, and wherein the generated correlation values KW of a time slot TS are combined group by group to form accumulated correlation values AKW.

2. Method according to Claim 1, **characterized in that**, in each search step, the correlation values KW of a number of successive time slots TS of a time slot group are evaluated.

3. Method according to Claim 1 or 2, **characterized in that**, in each search step, a certain number of code chips which are contained in the received CDMA signal are sampled for each time slot TS of a time slot group, and are correlated with the synchronization detection sequence for generating correlation values KW.

4. Method according to one of the preceding claims, **characterized in that** the corresponding accumulated correlation values AKW of the time slots within a time slot group are added together to form aggregate correlation values SAKW.

5. Method according to one of the preceding claims, **characterized in that** the search field of the subsequent search step is located around the position of the time slot TS at which the maximum aggregate correlation value SAKW for the preceding search step was determined.

6. Method according to one of the preceding claims, **characterized in that** the degree of narrowing-down of the search field is adjustable.

7. Method according to one of the preceding claims, **characterized in that** the number of jointly evaluated time slots TS within a time slot group can be adjusted differently in each search step.

8. Method according to one of the preceding claims, **characterized in that**, in the last search step, the address of the maximum aggregate correlation value SAKW Sₘₐₓ determined is used for synchronizing the received CDMA signal.

9. Method according to one of the preceding claims, **characterized in that** the code chips of a time slot TS which are contained in the received CDMA signal are sampled with an adjustable sampling frequency in the area of the adjusted time slot search field in each search step.

10. Method according to one of the preceding claims, **characterized in that** the sampling factor for forming the sampling frequency is at least two.

11. Method according to one of the preceding claims, **characterized in that** each CDMA time slot comprises 2560 code chips which are sampled in the first search step for forming 5120 code chip samples.

12. Method according to one of the preceding claims, **characterized in that** the correlation values are accumulated group by group, a certain number of successive correlation values KW in each case being combined to form accumulated correlation values AKW.

13. Method according to one of the preceding claims, **characterized in that** the aggregate correlation values are temporarily stored.

14. Method according to one of the preceding claims, **characterized in that** the method exhibits two search steps, the search field in the first search step comprising all 5120 code chip samples of a time slot TS and the search field in the second search step comprising about 500 code chip samples of a time slot TS.

15. Method according to one of the preceding claims, **characterized in that** the jointly processed time slot group comprises 8 successive CDMA time slots in the first search step and 4 successive CDMA time slots in the second search step.

16. Method according to one of the preceding claims, **characterized in that**, in the first search step, the correlation values KW within a time slot TS are in each case combined to form 512 accumulated correlation values AKW which are added to the corresponding 512 accumulated correlation values AKW of the remaining time slots TS of the same time slot group to form 512 aggregate correlation values SAKW.

17. Method according to one of the preceding claims, **characterized in that**, in the second search step, the correlation values KW formed from about 500 code chip samples are added to the corresponding correlation values KW of the remaining time slots TS of the same time slot group to form 500 aggregate correlation values SAKW of the time slot group without previous accumulation.

## Revendications

1. Procédé pour la synchronisation d'un signal de réception CDMA, dans lequel une séquence de synchronisation (SCH) incluse dans le signal de réception CDMA est déterminée en plusieurs étapes successives,
le signal de réception CDMA étant mis en corrélation lors de chaque étape à l'intérieur d'une zone de recherche par créneau temporel avec une séquence mémorisée d'identification de synchronisation pour la formation de valeurs de corrélation KW et la zone de recherche par créneau temporel de l'étape de recherche suivante étant rétrécie en fonction des valeurs de corrélation KW analysées avec une précision de recherche élevée, et
les valeurs de corrélation KW générées d'un créneau temporel TS étant réunies par groupes pour former des valeurs de corrélation AKW cumulées.

2. Procédé selon la revendication 1, **caractérisé en ce que**, lors de chaque étape de recherche, les valeurs de corrélation KW de plusieurs créneaux temporels TS successifs d'un groupe de créneaux temporels sont analysées.

3. Procédé selon la revendication 1 ou 2, **caractérisé en ce que**, lors de chaque étape de recherche, pour chaque créneau temporel TS d'un groupe de créneaux temporels, un nombre défini de bribes de code incluses dans le signal de réception CDMA est balayé et mis en corrélation avec la séquence de reconnaissance de synchronisation pour la génération de valeurs de corrélation KW.

4. Procédé selon l'une quelconque des revendications précédentes, **caractérisé en ce que** les valeurs de corrélation AKW cumulées correspondantes des créneaux temporels sont cumulées à l'intérieur d'un groupe de créneaux temporels en valeurs de corrélation cumulées SAKW.

5. Procédé selon l'une quelconque des revendications précédentes, **caractérisé en ce que** la zone de recherche de l'étape de recherche suivante est située autour de la position du créneau temporel TS sur laquelle la valeur de corrélation cumulée SAKW maximale a été déterminée pour l'étape de recherche précédente.

6. Procédé selon l'une quelconque des revendications précédentes, **caractérisé en ce que** le degré de rétrécissement de la zone de recherche peut être réglé.

7. Procédé selon l'une quelconque des revendications précédentes, **caractérisé en ce que** le nombre des créneaux temporels TS analysés ensemble peut être réglé différemment à l'intérieur d'un groupe de créneaux temporels lors de chaque étape de recherche.

8. Procédé selon l'une quelconque des revendications précédentes, **caractérisé en ce que**, lors de la dernière étape de recherche, l'adresse de la valeur de corrélation cumulée maximale calculée SAKW Sₘₐₓ est utilisée pour la synchronisation du signal de réception CDMA.

9. Procédé selon l'une quelconque des revendications précédentes, **caractérisé en ce que** les bribes de code contenues dans le signal de réception CDMA d'un créneau temporel TS sont balayées lors de chaque étape de recherche dans le secteur de la zone de recherche à créneau temporel réglée avec une fréquence de balayage réglable.

10. Procédé selon l'une quelconque des revendications précédentes, **caractérisé en ce que** le facteur de balayage pour la formation de la fréquence de balayage est d'au moins deux.

11. Procédé selon l'une quelconque des revendications précédentes, **caractérisé en ce que** chaque créneau temporel CDMA comprend 2.560 bribes de code qui sont balayées dans la première étape de recherche pour la formation de 5.120 valeurs de balayage de puce de code.

12. Procédé selon l'une quelconque des revendications précédentes, **caractérisé en ce que** les valeurs de corrélation sont réunies par groupes, un certain nombre de valeurs de corrélation KW successives étant réunies à chaque fois pour former des valeurs de corrélation AKW cumulées.

13. Procédé selon l'une quelconque des revendications précédentes, **caractérisé en ce que** les valeurs de corrélation cumulées sont stockées provisoirement.

14. Procédé selon l'une quelconque des revendications précédentes, **caractérisé en ce que** le procédé présente deux étapes de recherche, la zone de recherche dans la première étape de recherche comprenant l'ensemble des 5.120 valeurs de balayage de bribe de code d'un créneau temporel TS et la zone de recherche dans la seconde étape de recherche comprenant environ 500 valeurs de balayage de bribe de code d'un créneau temporel TS.

15. Procédé selon l'une quelconque des revendications précédentes, **caractérisé en ce que** le groupe de créneaux temporels traité et commun comprend dans la première étape de recherche 8 créneaux temporels CDMA successifs et dans la seconde étape de recherche 4 créneaux temporels CDMA successifs.

16. Procédé selon l'une quelconque des revendications précédentes, **caractérisé en ce que**, lors de la première étape de recherche, à chaque fois les valeurs de corrélation KW sont regroupées à l'intérieur d'un créneau temporel TS en 512 valeurs de corrélation AKW cumulées, qui sont totalisées avec les 512 valeurs de corrélation AKW cumulées correspondantes des autres créneaux temporels TS du même groupe de créneaux temporels en 512 valeurs de corrélation totalisées SAKW.

17. Procédé selon l'une quelconque des revendications précédentes, **caractérisé en ce que**, lors de la seconde étape de recherche, les valeurs de corrélation KW formées à partir d'environ 500 valeurs de balayage de bribes de code sont totalisées avec les valeurs de corrélation KW correspondantes des autres créneaux temporels TS du même groupe de créneaux temporels pour former 500 valeurs de corrélation totalisées SAKW du groupe de créneaux temporels sans cumul préalable.
